(19) Europäisches Patentamt
European Patent Office
Office européen des brevets

(11) EP 3 628 854 A1

(12) EUROPEAN PATENT APPLICATION

(43) Date of publication:
01.04.2020 Bulletin 2020/14

(51) Int Cl.:
F02D 35/02 (2006.01)      F02D 41/00 (2006.01)
F02D 41/14 (2006.01)      F02D 41/24 (2006.01)
F02P 5/152 (2006.01)      F02D 19/06 (2006.01)

(21) Application number: 19195204.3

(22) Date of filing: 03.09.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.09.2018 JP 2018185471

(71) Applicant: TOYOTA JIDOSHA KABUSHIKI
KAISHA
Aichi-ken, 471-8571 (JP)

(72) Inventors:
• SATA, Kota
Aichi-ken, 471-8571 (JP)
• EHARA, Masato
Aichi-ken, 471-8571 (JP)
• SHEN, Tielong
Chiyoda-ku, Tokyo 102-8554 (JP)
• SHEN, Xun
Chiyoda-ku, Tokyo 102-8554 (JP)
• ZHANG, Yahui
Chiyoda-ku, Tokyo 102-8554 (JP)

(74) Representative: D Young & Co LLP
120 Holborn
London EC1N 2DY (GB)

(54) CONTROL APPARATUS, CONTROL METHOD, DISCRIMINATION BOUNDARY SETTING APPARATUS, AND DISCRIMINATION BOUNDARY SETTING METHOD

(57) A control apparatus configured to control a power unit of a vehicle includes an electronic control unit (1) configured to i) store a set of measurement values of at least one physical parameter representing a plurality of conditions of the power unit; ii) approximate the stored set of the measurement values, by mixed probability distribution, so as to obtain a first probability distribution of the measurement values representing a first condition, and a second probability distribution of the measurement values representing a second condition; iii) set a discrimination boundary between values representing the first condition and values representing the second condition, between mean values of the first probability distribution and the second probability distribution; and iv) control the power unit, according to a result of comparison between a measurement value and the discrimination boundary.

FIG. 2

**Description**

BACKGROUND OF THE INVENTION

1. Field of the Invention

The invention relates to a control apparatus that controls a power unit installed on a vehicle, a control method, a discrimination boundary setting apparatus for setting a discrimination boundary used in control of the power unit, and a discrimination boundary setting method.

2. Description of Related Art

A power unit of a vehicle is required to be controlled, so that an abnormality, such as knocking, does not occur in the power unit. Thus, technologies for modeling a condition where such an abnormality occurs have been proposed (see, for example, Giulio Panzani et al., "Engine Knock Margin Estimation Using In-Cylinder Pressure Measurements", IEEE/ASME Transactions on Mechatronics, vol. 22, no. 1, pp. 301-311, February 2017, and Tatsuya Ibuki et al., "Knocking Detection in Gasoline Engines Based on Probability Density Functions: A Mixed Gaussian Distribution Approach", in IEEE Annual Conference On Decision and Control, 2015, pp. 191-196, 2015).

In Giulio Panzani et al., "Engine Knock Margin Estimation Using In-Cylinder Pressure Measurements", IEEE/ASME Transactions on Mechatronics, vol. 22, no. 1, pp. 301-311, February 2017, for example, a technology of estimating a knock margin with a logistic regression model, using an in-cylinder pressure sensor as a knock estimator, is proposed. Also, in Tatsuya Ibuki et al., "Knocking Detection in Gasoline Engines Based on Probability Density Functions: A Mixed Gaussian Distribution Approach", in IEEE Annual Conference On Decision and Control, 2015, pp. 191-196, 2015, a technology of modeling a distribution of the knock intensity during normal combustion and a distribution of the knock intensity during abnormal combustion, using mixed Gaussian distribution, according to an expectation-maximization (EM) algorithm, is proposed.

SUMMARY OF THE INVENTION

However, even with the above technologies, the optimum discrimination boundary for discriminating between a condition where an abnormality occurs in a power unit, and a condition where no abnormality occurs in the power unit, may not be determined.

The invention provides a control apparatus of a power unit, which can appropriately set a discrimination boundary for discriminating different conditions in a power unit installed on a vehicle.

A first aspect of the invention relates to a control apparatus configured to control a power unit of a vehicle. The control apparatus includes an electronic control unit configured to: i) store a set of measurement values of at least one physical parameter representing a plurality of conditions of the power unit which are different from each other; ii) approximate the stored set of the measurement values, by mixed probability distribution, so as to obtain a first probability distribution as a distribution of the measurement values of the at least one physical parameter representing a first condition as one of the plurality of conditions, and a second probability distribution as a distribution of the measurement values of the at least one physical parameter representing a second condition as another one of the plurality of conditions; iii) set a discrimination boundary between values of the at least one physical parameter representing the first condition and values of the at least one physical parameter representing the second condition, between a mean value of the first probability distribution and a mean value of the second probability distribution; and iv) control the power unit, according to a result of comparison between a measurement value of the at least one physical parameter and the discrimination boundary.

In the control apparatus, the electronic control unit may set the discrimination boundary, such that a sum of a probability that a condition of the power unit corresponding to the measurement value of the at least one physical parameter is erroneously determined as the second condition though the condition is the first condition, and a probability that the condition of the power unit corresponding to the measurement value of the at least one physical parameter is erroneously determined as the first condition though the condition is the second condition, is minimized.

In the control apparatus, the power unit may be an engine, and the first condition may be a condition in which knocking occurs in the engine, while the second condition may be a condition in which no knocking occurs in the engine; the electronic control unit may be configured to store the measurement value obtained from a sensor that measures the at least one physical parameter, so as to update the set of the measurement values; and when the number of times the electronic control unit determines that knocking occurs in the engine, by comparing the discrimination boundary with the measurement value of the at least one physical parameter obtained from the sensor, reaches a predetermined number, within a latest predetermined period, the electronic control unit may obtain again the first probability distribution and the second probability distribution, based on the updated set of the measurement values of the at least one physical parameter, and the electronic control unit may set the discrimination boundary again, between the mean value of the first probability distribution obtained again and the mean value of the second probability distribution obtained again.

In the control apparatus, the power unit may include an engine including an ignition plug, and the first condition may be a condition in which knocking occurs in the engine, while the second condition may be a condition in which no knocking occurs in the engine; and when the measurement value obtained from a sensor that measures the at least one physical parameter is on one side of the discrimination boundary, the one side including the mean value of the first probability distribution, the electronic control unit may retard ignition timing of the ignition plug by a larger degree, as the measurement value is closer to the mean value of the first probability distribution.

In the control apparatus, the power unit may include an engine, and the first condition may be a condition in which heavy fuel is supplied to the engine, while the second condition may be a condition in which light fuel is supplied to the engine; and the at least one physical parameter may include torque or an angular acceleration generated during fast idling at start of the engine.

A second aspect of the invention relates to a control method of controlling a power unit of a vehicle. The control method includes approximating a set of measurement values of at least one physical parameter stored in an electronic control unit and representing a plurality of conditions of the power unit which are different from each other, by mixed probability distribution, so as to obtain a first probability distribution as a distribution of the measurement values of the at least one physical parameter representing a first condition as one of the plurality of conditions, and a second probability distribution as a distribution of the measurement values of the at least one physical parameter representing a second condition as another one of the plurality of conditions; setting a discrimination boundary between values of the at least one physical parameter representing the first condition and values of the at least one physical parameter representing the second condition, between a mean value of the first probability distribution and a mean value of the second probability distribution; and controlling the power unit, according to a result of comparison between a measurement value of the at least one physical parameter and the discrimination boundary.

A third aspect of the invention relates to a discrimination boundary setting apparatus configured to set a discrimination boundary that is compared with at least one physical parameter representing a plurality of conditions of a power unit of a vehicle which are different from each other, in control of the power unit. The discrimination boundary setting apparatus includes an electronic control unit configured to: i) store a set of measurement values of the at least one physical parameter; ii) approximate the set of the measurement values by mixed probability distribution, so as to obtain a first probability distribution as a distribution of the measurement values of the at least one physical parameter representing a first condition as one of the plurality of conditions, and a second probability distribution as a distribution of the measurement values of the at least one physical parameter representing a second condition as another one of the plurality of conditions; and iii) set the discrimination boundary between values of the at least one physical parameter representing the first condition and values of the at least one physical parameter representing the second condition, between a mean value of the first probability distribution and a mean value of the second probability distribution.

A fourth aspect of the invention relates to a discrimination boundary setting method of setting a discrimination boundary that is compared with at least one physical parameter representing a plurality of conditions of a power unit of a vehicle which are different from each other, in control of the power unit. The discrimination boundary setting method includes approximating a set of measurement values of the at least one physical parameter stored in an electronic control unit, by mixed probability distribution, so as to obtain a first probability distribution as a distribution of the measurement values of the at least one physical parameter representing a first condition as one of the plurality of conditions, and a second probability distribution as a distribution of the measurement values of the at least one physical parameter representing a second condition as another one of the plurality of conditions; and setting the discrimination boundary between values of the at least one physical parameter representing the first condition and values of the at least one physical parameter representing the second condition, between a mean value of the first probability distribution and a mean value of the second probability distribution.

The control apparatus of the power unit according to the invention yields an effect that a discrimination boundary for discriminating different conditions in the power unit installed on the vehicle can be appropriately set.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a view of the hardware configuration of an electronic control unit as a first embodiment of a control apparatus;
FIG. 2 is a functional block diagram of a processor in connection with engine control including discrimination boundary setting operation;

FIG. 3A to FIG. 3C are views useful for generally describing the discrimination boundary setting operation;

FIG. 4 is an operation flowchart of a discrimination boundary setting routine;

FIG. 5 is an operation flowchart of an engine control routine; and

FIG. 6 is a view showing one example of distribution of torque, which is modeled in discrimination boundary setting operation according to a second embodiment.

DETAILED DESCRIPTION OF EMBODIMENTS

Referring to the drawings, a control apparatus of a power unit installed on a vehicle will be described. The control apparatus models different conditions in the power unit installed on the vehicle, for example, a normally operating condition of the power unit and a condition in which some abnormality may arise in the power unit, by approximating a set of measurement values of a physical parameter representing a condition of the power unit, which is obtained while the power unit is in operation, by mixed probability distribution. Then, on the basis of a probability distribution that models one of the conditions of the power unit, and a probability distribution that models the other condition of the power unit, the control apparatus sets a discrimination boundary associated with the physical parameter representing the condition of the power unit, between respective mean values of the two probability distributions, so as to make the discrimination boundary appropriate.

In the following, a control apparatus according to a first embodiment will be described. The control apparatus according to the first embodiment controls an engine installed on a vehicle. In this case, the control apparatus approximates a set of measurement values of knock intensity measured during operation of the engine, by mixed Gaussian distribution, thereby to model a distribution of knock intensity at the time when knocking occurs, and a distribution of knock intensity at the time when no knocking occurs. Then, the control apparatus sets a discrimination boundary between the knock intensity at which knocking occurs, and the knock intensity at which no knocking occurs, based on a Gaussian distribution representing the distribution of knock intensity when knocking occurs, and a Gaussian distribution representing the distribution of knock intensity when no knocking occurs. In this connection, the engine is one example of power unit, and a condition in which knocking occurs in the engine and a condition in which no knocking occurs in the engine are examples of conditions of the engine. Also, the knock intensity is one example of physical parameter representing a condition of the power unit.

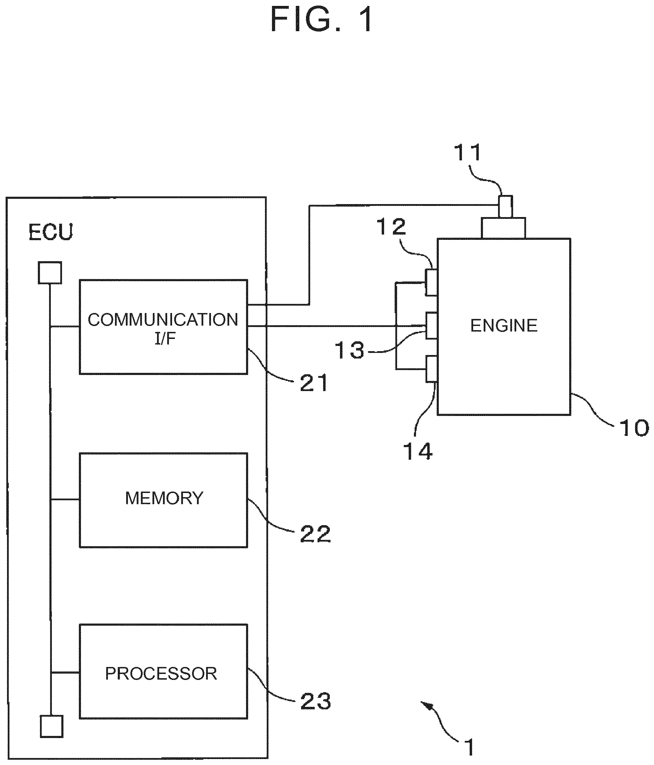

FIG. 1 shows the hardware configuration of an electronic control unit as the first embodiment of the control apparatus and discrimination boundary setting apparatus. In this embodiment, an electronic control unit (ECU) 1 installed on the vehicle has a communication interface 21, memory 22, and processor 23, and controls an engine 10 having a plurality of cylinders and ignition plugs 11 provided in the respective cylinders. In FIG. 1, only one ignition plug 11 is illustrated as a typical one, for the sake of simplicity.

The communication interface 21 has an interface circuit for connecting the ECU 1 with an in-vehicle network (not shown). The communication interface 21 receives sensor signals from various sensors installed on the vehicle, for example, a knock sensor 12 that measures the knock intensity of the engine 10, rotation sensor 13 that measures the rotational speed of the engine 10, and in-cylinder pressure sensor 14 that measures the pressure in each cylinder of the engine 10. The communication interface 21 then transmits the received sensor signals to the processor 23.

The memory 22 is one example of the storage unit, and has a volatile semiconductor memory and a non-volatile semiconductor memory. The memory 22 stores various kinds of data used in various processing tasks performed by the processor 23. For example, the memory 22 stores a set of measurement values of the knock intensity, parameters that define mixed Gaussian distribution that approximates the set of measurement values of the knock intensity, a discrimination boundary between the knock intensity at which knocking occurs, and the knock intensity at which no knocking occurs, an initial value of the discrimination boundary, and so forth.

The processor 23 has one or more Central Processing Units (CPUs), and its peripheral circuit. The processor 23 may further include another arithmetic circuit, such as a logical operation unit or a numerical value operation unit. The processor 23 controls the engine 10. In this embodiment, the processor 23 controls the ignition timing of the ignition plug 11 provided in each cylinder of the engine 10, in each combustion cycle, based on a measurement value of the knock intensity and the discrimination boundary. Also, the processor 23 stores a measurement value of the knock intensity in the memory 22 in predetermined cycles. Furthermore, the processor 23 sets the discrimination boundary, in predetermined timing, based on a set of measurement values of the knock intensity stored in the memory 22.

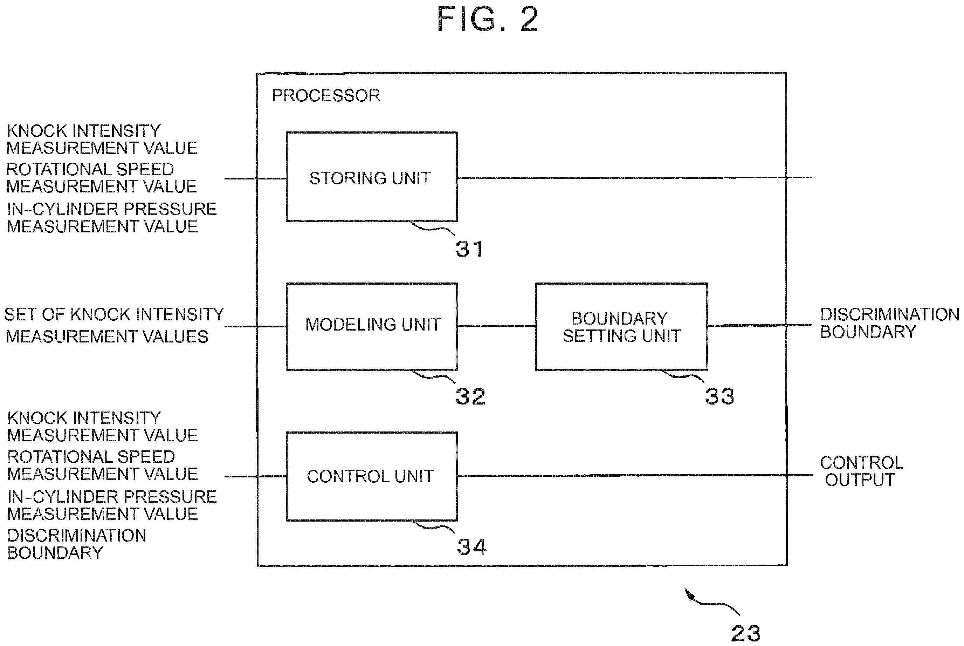

FIG. 2 is a functional block diagram of the processor 23, which relates to engine control including discrimination boundary setting operation. The processor 23 has a storing unit 31, modeling unit 32, boundary setting unit 33, and control unit 34. These units of the processor 23 are implemented by computer programs run on the processor 23. In another example, each of the above units of the processor 23 may be a dedicated arithmetic circuit provided in the processor 23. The storing unit 31, modeling unit 32 and boundary setting unit 33, out of these units of the processor 23, perform the discrimination boundary setting operation.

The storing unit 31 updates a set of measurement values of the knock intensity, which is stored in the memory 22, and is used for modeling distribution of the knock intensity when knocking occurs, and distribution of the knock intensity when no knocking occurs. To this end, the storing unit 31 stores a measurement value of the knock intensity, which is received by the processor 23 from the knock sensor 12 via the communication interface 21, in the memory 22, in predetermined cycles. The storing unit 31 stores the measurement value of the knock intensity, along with a rotational speed of the engine 10 measured by the rotation sensor 13, and a charging efficiency obtained from an in-cylinder pressure measured by the in-cylinder pressure sensor 14. The storing unit 31 may obtain the charging efficiency corresponding to the measured in-cylinder pressure, by referring to a table that is stored in advance in the memory 22, and indicates the relationship between the in-cylinder pressure and the charging efficiency, for example.

The predetermined cycle may be equal to the combustion cycle of the engine 10 or an integral multiple of the combustion cycle, or a preset fixed cycle (e.g., 1/10 sec., 1 sec., 1 min., or 10 min.). Also, the storing unit 31 may store a measurement value of the knock intensity at a predetermined time in the combustion cycle of the engine 10, in the memory 22, in each cycle. The predetermined time may be, for example, a point in time at which the knock intensity is at a maximum in the combustion cycle, or the ignition timing of the ignition plug 11 or a point in time prior to the ignition timing by a given offset time.

When the total number of the measurement values of the knock intensity, which are stored in the memory 22, exceeds the upper limit specified from the storage capacity of the memory 22, the storing unit 31 may delete measurement values in chronological order, from the memory 22, so that the total number of the measurement values of the knock intensity becomes equal to or smaller than the upper limit.

The modeling unit 32 performs modeling operation to model the distribution of the knock intensity when knocking occurs, and the distribution of the knock intensity when no knocking occurs, by approximating a set of measurement values of the knock intensity, which is stored in the memory 22, by mixed Gaussian distribution.

For example, the modeling unit 32 models the distribution of the knock intensity when knocking occurs, and the distribution of the knock intensity when no knocking occurs, with respect to each combination of the rotational speed of the engine 10 and the charging efficiency. For example, when the number of measurement values of the knock intensity for a certain combination of the rotational speed of the engine 10 and the charging efficiency reaches a predetermined number (e.g., 100 - 1000), the modeling unit 32 performs modeling operation on the set of measurement values of the knock intensity with respect to the combination (which will be called "combination in question" for the sake of convenience). When obtaining a set of measurement values of the knock intensity, the modeling unit 32 may divide a range that can be taken by the rotational speed, into a plurality of zones (the range of the rotational speed of each zone is, for example, 100 - 1000 rpm), and obtain the number of measurement values of the knock intensity, with respect to each of the zones. In this case, the modeling unit 32 may set the sum of the number of the measurement values of the knock intensity corresponding to the rotational speeds included in each zone, as the number of the measurement values with respect to a typical rotational speed of the zone concerned. Similarly, the modeling unit 32 may divide a range that can be taken by the charging efficiency, into a plurality of zones (the range of the charging efficiency of each zone is, for example, 5% - 10%), and set the sum of the number of the measurement values of the knock intensity corresponding to the charging efficiencies included in each zone, as the number of the measurement values with respect to a typical charging efficiency of the zone concerned.

In a manner similar to the modeling method described in Tatsuya Ibuki et al., "Knocking Detection in Gasoline Engines Based on Probability Density Functions: A Mixed Gaussian Distribution Approach", in IEEE Annual Conference on Decision and Control, 2015, pp. 191-196, 2015, the modeling unit 32 can obtain a Gaussian distribution N $(\mu_1, \sigma_1{}^2)$ representing a distribution of the knock intensity when no knocking occurs, a Gaussian distribution N $(\mu_2, \sigma_2{}^2)$ representing a distribution of the knock intensity when knocking occurs (where $\mu_k$ is a mean value of Gaussian distribution k, and $\sigma_k$ is variance of Gaussian distribution k, k=1, 2), and a weight coefficient $\omega_k$ applied to each Gaussian distribution, by applying the EM algorithm to the set of measurement values of the knock intensity with respect to the combination in question. Namely, the modeling unit 32 can regard the Gaussian distribution N $(\mu_1, \sigma_1{}^2)$ having the lower mean value of the knock intensity, out of the two Gaussian distributions obtained through application of the EM algorithm, as a model representing the distribution of the knock intensity when no knocking occurs, and regard the Gaussian distribution N $(\mu_2, \sigma_2{}^2)$ having the higher mean value of the knock intensity, as a model representing the distribution of the knock intensity when knocking occurs.

When the modeling unit 32 finishes the modeling operation, with respect to the combination in question, it transmits the mixed Gaussian distribution obtained with respect to the combination, to the boundary setting unit 33.

When the modeling unit 32 finishes the modeling operation, with respect to the combination in question, it may delete the set of measurement values of the knock intensity for the combination in question, from the memory 22.

The boundary setting unit 33 sets a discrimination boundary between the knock intensity at which knocking occurs, and the knock intensity at which no knocking occurs, based on the mixed Gaussian distribution obtained with respect to the combination in question of the rotational speed of the engine 10 and the charging efficiency. In this embodiment, the boundary setting unit 33 sets the discrimination boundary between the mean values of the two Gaussian distributions included in the mixed Gaussian distribution.

Generally, the distribution of the knock intensity when knocking occurs and the distribution of the knock intensity when no knocking occurs partially overlap each other. Accordingly, it is impossible to eliminate a mistake in determination as to whether knocking occurs, no matter how the discrimination boundary of the knock intensity is set. Thus, in this embodiment, the boundary setting unit 33 sets the discrimination boundary so that the probability of erroneous determination is minimized. Namely, the boundary setting unit 33 sets the discrimination boundary, so that the sum of the probability of being determined that no knocking occurs even though knocking occurs, and the probability of being determined that knocking occurs even though no knocking occurs, is minimized, based on the mixed Gaussian distribution obtained with respect to the combination in question of the rotational speed of the engine 10 and the charging efficiency. The sum J(T) of the probability of being determined that no knocking occurs even though knocking occurs, and the probability of being determined that knocking occurs even though no knocking occurs, is expressed by the following equation (1), where T denotes the discrimination boundary of the knock intensity.

$$J(T) = \int_T^\infty \frac{\omega_1}{\sqrt{2\pi\sigma_1^2}} e^{-\frac{(x-\mu_1)^2}{2\sigma_1^2}} dx + \int_{-\infty}^T \frac{\omega_2}{\sqrt{2\pi\sigma_2^2}} e^{-\frac{(x-\mu_2)^2}{2\sigma_2^2}} dx \quad \cdots (1)$$

Accordingly, the boundary setting unit 33 may set the discrimination boundary T according to the following equation (2), so as to minimize J(T).

$$T = \mu_1 + \frac{4\sigma_1^2(\mu_1-\mu_2) + \sqrt{16\sigma_1^2\sigma_2^2[(\mu_1-\mu_2)^2 + 2(\sigma_2^2-\sigma_1^2)\ln\frac{\omega_1\sigma_2}{\omega_2\sigma_1}]}}{4\sigma_2^2 - 4\sigma_1^2} \quad \cdots (2)$$

For example, when $\mu_1$=0.5443, $\mu_2$=1.2405, $\sigma_1$=0.3411, $\sigma_2$=0.4424, $\omega_1$=0.62, and $\omega_2$=0.38, the discrimination boundary T is set to 1.0927, according to Eq. (2).

In another method, the boundary setting unit 33 may set the discrimination boundary, so that the Mahalanobis' generalized distance from the mean value $\mu_1$ of the Gaussian distribution representing the distribution of the knock intensity when knocking occurs, to the discrimination boundary, becomes equal to the Mahalanobis' generalized distance from the mean value $\mu_2$ of the Gaussian distribution representing the distribution of the knock intensity when no knocking occurs, to the discrimination boundary. With the discrimination boundary thus set, the boundary setting unit 33 can set the discrimination boundary, so that the probability of being determined that no knocking occurs, even though knocking occurs, becomes equal to the probability of being determined that knocking occurs, even though no knocking occurs.

If knocking occurs in the engine 10, it may induce a failure of the engine 10. Thus, in order to make knocking less likely to occur, the boundary setting unit 33 may set the discrimination boundary, so that the discrimination boundary is closer by a given offset value to the mean value $\mu_2$ of the Gaussian distribution representing the distribution of the knock intensity when no knocking occurs, than the value of the discrimination boundary obtained by any of the above methods. As a result, it is more likely to be determined that knocking occurs; therefore, the boundary setting unit 33 can reduce the possibility of erroneous determination that no knocking occurs, even though knocking occurs.

The boundary setting unit 33 stores the discrimination boundary set with respect to the combination in question of the rotational speed of the engine 10 and the charging efficiency, along with the combination, in the memory 22.

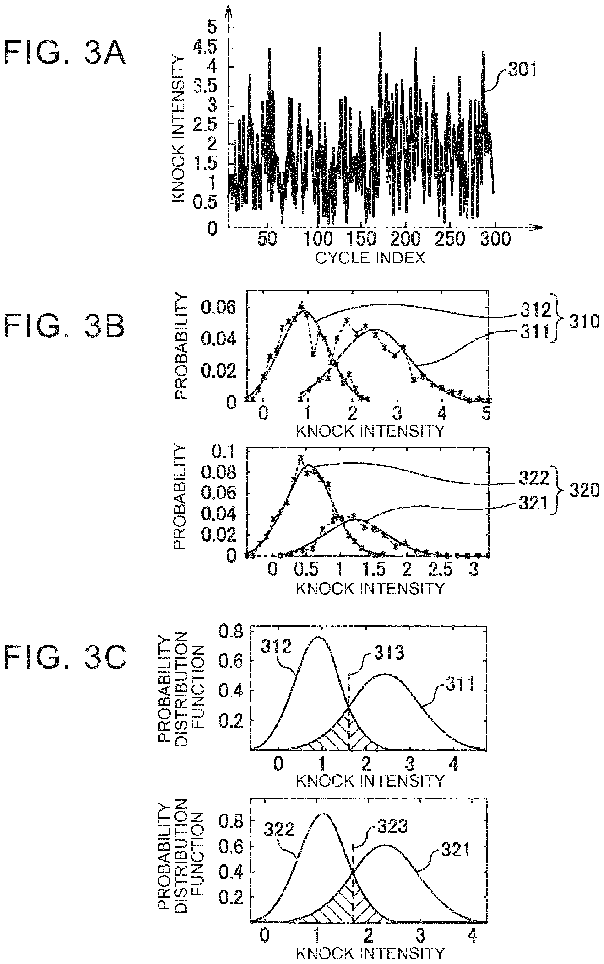

The discrimination boundary setting operation will be generally described, referring to FIG. 3A to FIG. 3C. In FIG. 3A, the horizontal axis indicates the cycle of acquisition of the knock intensity, and the vertical axis denotes the knock intensity. A broken line 301 in FIG. 3A represents measurement values of the knock intensity obtained in respective acquisition cycles. In FIG. 3B and FIG. 3C, the horizontal axis indicates the knock intensity, and the vertical axis indicates the probability. Two graphs in FIG. 3B represent mixed Gaussian distributions that approximate sets of measurement values of the knock intensity, with respect to different combinations of the rotational speed of the engine 10 and the charging efficiency. Namely, the EM algorithm is applied to each set of measurement values of the knock intensity obtained in acquisition cycles and indicated by the broken line 301 in FIG. 3A, with respect to each combination of the rotational speed of the engine 10 and the charging efficiency, as described above, so that the mixed Gaussian distribution 310, 320 is obtained with respect to the combination in question, as shown in FIG. 3B. The mixed Gaussian distribution 310 includes a Gaussian distribution 311 representing a distribution of the knock intensity when knock intensity occurs, and a Gaussian distribution 312 representing a distribution of the knock intensity when no knocking occurs. Similarly, the mixed Gaussian distribution 320 includes a Gaussian distribution 321 representing a distribution of the knock intensity when knocking occurs, and a Gaussian distribution 322 representing a distribution of the knock intensity when no knocking occurs. Then, as shown in FIG. 3C, with regard to the mixed distribution obtained with respect to each combination, a discrimination boundary 313 is set between the mean value of the Gaussian distribution 311 representing the distribution of the knock intensity when knocking occurs, and that of the Gaussian distribution 312 representing the distribution of the knock intensity when no knocking occurs, and a discrimination boundary 323 is set between the mean value of the Gaussian distribution 321 representing the distribution of the knock intensity when knocking occurs, and that of the Gaussian distribution 322 representing the distribution of the knock intensity when no knocking occurs, as described above.

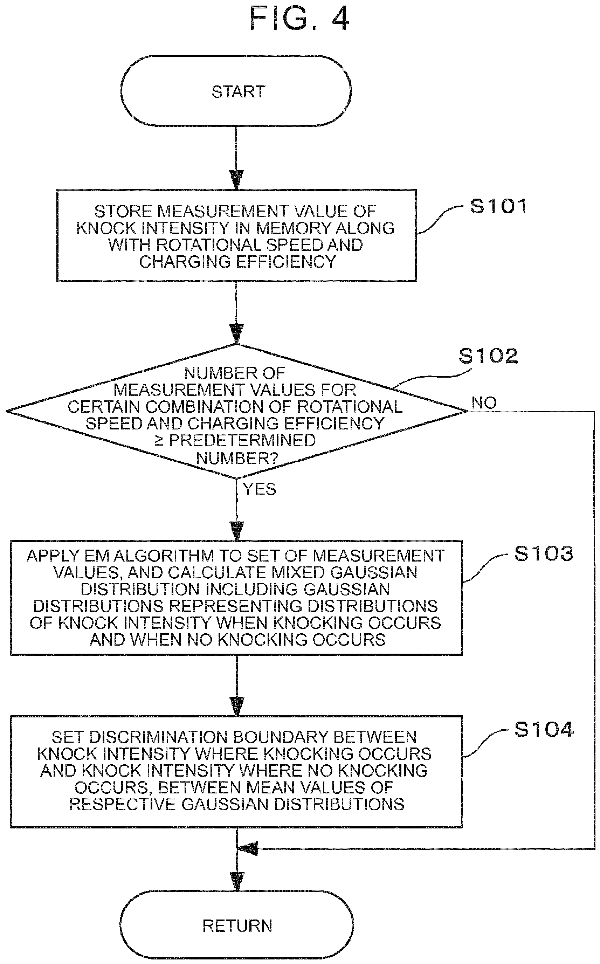

FIG. 4 is an operation flowchart of a discrimination boundary setting routine. The processor 23 executes the discrimination boundary setting routine in predetermined cycles, according to the operation flowchart as follows.

The storing unit 31 stores a measurement value of the knock intensity, which is received by the processor 23 from the knock sensor 12 via the communication interface 21, in the memory 22, along with the rotational speed of the engine 10 and the charging efficiency (step S101).

The modeling unit 32 determines whether the number of the measurement values of the knock intensity stored in the memory 22 reaches a predetermined number, with respect to each combination of the rotational speed of the engine 10 and the charging efficiency (step S102). When the number of the measurement values of the knock intensity has not reached the predetermined number, with respect to any combination (NO in step S102), the processor 23 finishes the current cycle of the discrimination boundary setting routine.

On the other hand, when the number of the measurement values of the knock intensity reaches the predetermined number, with respect to a certain combination (YES in step SI02), the modeling unit 32 applies the EM algorithm to a set of measurement values of the knock intensity for the combination, so as to obtain mixed Gaussian distribution including a Gaussian distribution $N(\mu_1, \sigma_1)$ representing a distribution of the knock intensity when knocking occurs, and a Gaussian distribution $N(\mu_2, \sigma_2)$ representing a distribution of the knock intensity when no knocking occurs (step S103).

The boundary setting unit 33 sets a discrimination boundary between the knock intensity at which knocking occurs and the knock intensity at which no knocking occurs, between the mean values of the respective Gaussian distributions, which are included in the mixed Gaussian distribution obtained with respect to the combination for which the number of the measurement values of the knock intensity has reached the predetermined number (step S104). Then, the boundary setting unit 33 stores the set discrimination boundary in the memory 22, and finishes the discrimination boundary setting routine.

The control unit 34 controls the ignition timing of the ignition plug 11 in each cylinder of the engine 10, based on the discrimination boundary corresponding to the current combination of the rotational speed of the engine 10 and the charging efficiency, and the latest measurement value of the knock intensity, in each combustion cycle. For example, the control unit 34 reads the discrimination boundary corresponding to the current combination of the rotational speed of the engine 10 and the charging efficiency, from the memory 22. When no discrimination boundary has been set for the combination in question, the control unit 34 may read an initial value of the discrimination boundary set for the combination, as the discrimination boundary, from the memory 22. Then, when the measurement value of the knock intensity obtained by the knock sensor 12 is smaller than the read discrimination boundary, until the time elapsed from the start of the combustion cycle reaches the ignition timing (Minimum advance for the Best Torque, MBT) at which the torque is maximized, namely, when the measurement value of the knock intensity lies on one side of the discrimination boundary closer to the mean value of the Gaussian distribution representing the distribution of the knock intensity when no knocking occurs (i.e., when the measurement value of the knock intensity is on one side of the discrimination boundary, the one side including the mean value of the Gaussian distribution representing the distribution of the knock intensity when no knocking occurs), the control unit 34 set the ignition timing to MBT. On the other hand, when the measurement value of the knock intensity obtained by the knock sensor 12 becomes larger than the read discrimination boundary, before the elapsed time reaches the MBT, namely, when the measurement value of the knock intensity lies on one side of the discrimination boundary closer to the mean value of the Gaussian distribution representing the distribution of the knock intensity when knocking occurs (i.e., when the measurement value of the knock intensity is on one side of the discrimination boundary, the one side including the mean value of the Gaussian distribution representing the distribution of the knock intensity when knocking occurs), the control unit 34 sets the timing that is retarded by a predetermined time from the MBT, as the ignition timing. In this connection, a reference table representing the relationship between the MBT, and the combination of the rotational speed of the engine 10 and the charging efficiency, is stored in advance in the memory 22. Then, the control unit 34 may determine the MBT corresponding to the current combination of the rotational speed of the engine 10 and the charging efficiency, by referring to the reference table.

The above-indicated predetermined time may be a fixed time that is set in advance, or may be set to a longer time as the measurement value of the knock intensity is larger. In another example, the predetermined time may be set to a longer time as the measurement value of the knock intensity is closer to the mean value of the Gaussian distribution representing the distribution of the knock intensity when knocking occurs, namely, as the probability of occurrence of knocking is higher. As a result, the control unit 34 can curb occurrence of knocking in the engine 10 with higher reliability.

The control unit 34 outputs a control signal that causes the ignition plug 11 to be ignited at the determined ignition timing, to the ignition plug 11.

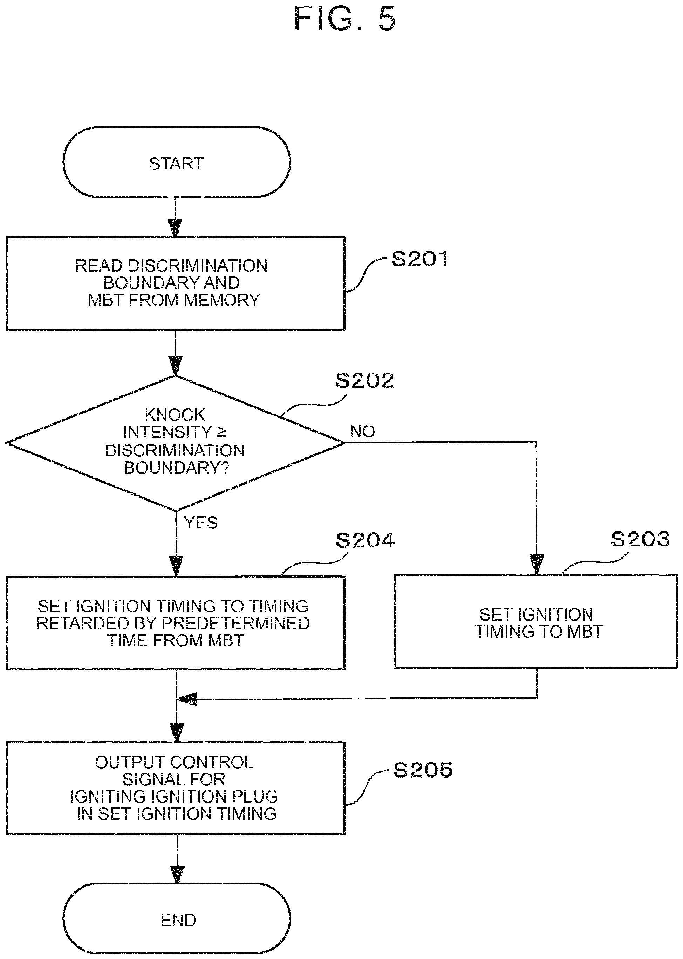

FIG. 5 is an operation flowchart of an engine control routine. The control unit 34 executes the engine control routine according to the operation flowchart as follows, in each combustion cycle.

The control unit 34 reads the discrimination boundary of the knock intensity and the MBT corresponding to the current combination of the rotational speed of the engine 10 and the charging efficiency, from the memory 22 (step S201). Then, the control unit 34 determines whether the knock intensity is equal to or greater than the discrimination boundary, by comparing the knock intensity obtained from the knock sensor 12 with the discrimination boundary, until the elapsed time from the start of the cycle reaches the MBT (step S202).

When the knock intensity is less than the discrimination boundary, until the elapsed time reaches the MBT (NO in step S202), the control unit 34 sets the ignition timing to the MBT (step S203). On the other hand, when the knock intensity becomes equal to or greater than the discrimination boundary, by the time when the elapsed time reaches the MBT (YES in step S202), the control unit 34 sets the ignition timing to a point in time that is retarded by the predetermined time from the MBT (step S204).

After execution of step S203 or S204, the control unit 34 outputs a control signal that causes the ignition plug 11 of the engine 10 to be ignited at the set ignition timing, to the ignition plug 11 (step S205). Then, the control unit 34 finishes the engine control routine.

As described above, the control apparatus of the first embodiment approximates a set of measurement values of the knock intensity by mixed Gaussian distribution, thereby to model a distribution of the knock intensity when knocking occurs, and a distribution of the knock intensity when no knocking occurs, with respective Gaussian distributions. Then, the control apparatus sets a discrimination boundary of the knock intensity used for determination as to whether knocking occurs, between a mean value of the Gaussian distribution representing the distribution of the knock intensity when knocking occurs, and a mean value of the Gaussian distribution representing the distribution of the knock intensity when no knocking occurs. Thus, even when the distribution of the knock intensity when knocking occurs and the distribution of the knock intensity when no knocking occurs partially overlap each other, the control apparatus can appropriately set the discrimination boundary for the knock intensity. Also, the control apparatus sets the discrimination boundary, based on the set of measurement values of the knock intensity obtained during traveling of the vehicle; therefore, the discrimination boundary for the knock intensity can be optimized, according to characteristics of the engine itself installed on the vehicle, and driving characteristics of the driver of the vehicle.

In a modified example, when the number of times the knock intensity becomes equal to or greater than the discrimination boundary exceeds a predetermined value, with respect to a certain combination of the rotational speed of the engine 10 and the charging efficiency, during the latest predetermined period (e.g., within one day, one week, or one month), the modeling unit 32 and the boundary setting unit 33 may perform modeling of the distribution of the knock intensity and setting of the discrimination boundary, with respect to the combination in question, so as to update the discrimination boundary. In this manner, the modeling unit 32 and the boundary setting unit 33 can update the discrimination boundary at an appropriate time.

In another modified example, the storing unit 31 may estimate knock intensity from an in-cylinder pressure measured by the in-cylinder pressure sensor 14, based on the relationship between the in-cylinder pressure and the knock intensity, and store the estimated knock intensity in the memory 22, in place of the knock intensity measured by the knock sensor 12. In this case, the storing unit 31 may determine an estimated value of the knock intensity corresponding to the measured in-cylinder pressure, by referring to a reference table indicating the relationship between the knock intensity and the in-cylinder pressure, for example. The reference table may be stored in advance in the memory 22. Similarly, the control unit 34 may estimate the knock intensity from the in-cylinder pressure measured by the in-cylinder pressure sensor 14, and controls the ignition timing, by comparing the estimated knock intensity with the discrimination boundary. In this case, the knock sensor 12 may be omitted or eliminated.

In a further modified example, the modeling unit 32 may approximate a set of measurement values of the knock intensity by mixed Gaussian distribution, with respect to each combination of the rotational speed of the engine 10 and the in-cylinder pressure.

In a still another modified example, the storing unit 31 may store a combination of two or more types of physical parameters representing conditions of the engine 10, in the memory 22. Then, the modeling unit 32 may approximate a set of values of the combination by mixed Gaussian distribution. In this case, when the combination consists of two types of physical parameters, for example, the discrimination boundary obtained by the boundary setting unit 33 is in the form of a curve representing the relationship between the two types of physical parameters. Also, when the combination consists of three types of physical parameters, the discrimination boundary obtained by the boundary setting unit 33 is in the form of a curved surface representing the relationship among the three types of physical parameters.

For example, the storing unit 31 may store a combination of a measurement value or estimated value of the knock intensity and a measurement value of the temperature of the engine 10, in association with the rotational speed of the engine 10 and the charging efficiency (or intake pressure), in the memory 22. For example, the processor 23 may use a measurement value of a temperature obtained from a water temperature meter (not shown) that measures the water temperature of a radiator that cools the engine 10, via the communication interface 21, as the measurement value of the temperature of the engine 10. Then, the modeling unit 32 may approximate a set of pairs of the measurement value or estimated value of the knock intensity and the measurement value of the temperature of the engine 10, which corresponds to each combination of the rotational speed of the engine 10 and the charging efficiency (or in-cylinder pressure), by mixed Gaussian distribution. In this case, too, the modeling unit 32 can approximate the set of pairs of the measurement value or estimated value of the knock intensity and the measurement value of the temperature of the engine 10, by mixed Gaussian distribution, by applying the EM algorithm to the set of the pairs, in a manner similar to that of the above embodiment. In this case, the mixed Gaussian distribution includes a two-dimensional Gaussian distribution representing a distribution of the pairs of the measurement value or estimated value of the knock intensity and the measurement value of the temperature of the engine 10 when knocking occurs, and a two-dimensional Gaussian distribution representing a distribution of the pairs of the measurement value or estimated value of the knock intensity and the measurement value of the temperature of the engine 10 when no knocking occurs. Then, the boundary setting unit 33 may set the discrimination boundary, based on the mixed Gaussian distribution, in a manner similar to that of the above embodiment. In this case, the discrimination boundary is in the form of a curve representing the relationship between the knock intensity and the temperature of the engine 10.

Next, a control apparatus according to a second embodiment will be described. The control apparatus of the second embodiment determines whether fuel fed to an engine as a power unit installed on a vehicle is light fuel or heavy fuel, based on torque of the engine 10.

The control apparatus of the second embodiment may be configured similarly to the ECU 1 of the first embodiment. However, the control apparatus of the second embodiment is different from that of the first embodiment in a physical parameter as an object of processing of each unit implemented by the processor 23, and phenomena associated with conditions of the engine. In the following, the differences from the control apparatus of the first embodiment will be described.

The ECU 1 as the control apparatus of the second embodiment sets a discrimination boundary between torque representing a condition where the fuel supplied to the engine 10 is heavy fuel, and torque representing a condition where the fuel supplied to the engine 10 is light fuel, based on distribution of torque during fast idling at the start of the engine 10.

When the storing unit 31 of the processor 23 receives a measurement value of output torque of the engine 10, during fast idling at the start of the engine 10, from a torque sensor (not shown) provided on a crankshaft of the engine 10, via the communication interface 21, it stores the measurement value in the memory 22, along with the number of times of ignition in each cylinder as counted from the start of fast idling. The storing unit 31 may calculate an angular acceleration of the crankshaft of the engine 10 from change of the rotational speed of the engine 10 during fast idling, and may store an estimated value of torque obtained from the angular acceleration, instead of the measurement value of torque received from the torque sensor, in the memory 22, along with the number of times of ignition in each cylinder as counted from the start of fast idling.

When the number of measurement values or estimated values of torque (which will be simply called "measurement values of torque") stored in the memory 22 reaches a predetermined number, with respect to a certain number of times of ignition, the modeling unit 32 approximates a set of the measurement values of torque with respect to the number of times of ignition, by mixed Gaussian distribution, so as to obtain a Gaussian distribution $N(\mu_{F1n}, \sigma_{F1n}^2)$ representing a distribution of measurement values of torque in a condition where heavy fuel is supplied to the engine 10, a Gaussian distribution $N(\mu_{F2n}, \sigma_{F2n}^2)$ representing a distribution of measurement values of torque in a condition where light fuel is supplied to the engine 10 (where "n" is the number of times of ignition), and a weight coefficient $\omega_{Fkn}$ (k=1, 2) of each Gaussian distribution. Then, the boundary setting unit 33 sets a discrimination boundary between torque representing the condition where the fuel supplied to the engine 10 is heavy fuel, and torque representing the condition where the fuel supplied to the engine 10 is light fuel, between mean values of the respective Gaussian distributions. At this time, the boundary setting unit 33 may set the discrimination boundary according to Eq. (2), so that the probability of erroneous determination is minimized, in a manner similar to that of the first embodiment. In another method, the boundary setting unit 33 may set the discrimination boundary, so that the Mahalanobis' generalized distance from the mean value of each Gaussian distribution to the discrimination boundary becomes equal.

Once the discrimination boundary is set, the control unit 34 compares a measurement value of torque at a certain number of times of ignition from the start of fast idling, with the discrimination boundary set with respect to the number of times of ignition. When the measurement value of torque lies on one side of the discrimination boundary closer to the mean value $\mu_{F1n}$ of the Gaussian distribution $N(\mu_{F1n}, \sigma_{F1n}^2)$ representing the distribution of the measurement values of torque in the condition where heavy fuel is supplied to the engine 10 (i.e., when the measurement value is on one side of the discrimination boundary, the one side including the mean value $\mu_{F1n}$), the control unit 34 determines that the heavy fuel is supplied to the engine 10. On the other hand, when the measurement value of torque lies on one side of the discrimination boundary closer to the mean value $\mu_{F2n}$ of the Gaussian distribution $N(\mu_{F2n}, \sigma_{F2n}^2)$ representing the distribution of the measurement values of torque in the condition where light fuel is supplied to the engine 10 (i.e.,

when the measurement value is on one side of the discrimination boundary, the one side including the mean value $\mu_{F2n}$), the control unit 34 determines that the light fuel is supplied to the engine 10. When the control unit 34 determines that the heavy fuel is supplied to the engine 10, it sets the ignition timing of the ignition plug 11 of the engine 10 to the timing optimized for the heavy fuel. On the other hand, when the control unit 34 determines that the light fuel is supplied to the engine 10, it sets the ignition timing of the ignition plug 11 of the engine 10 to the timing optimized for the light fuel. The ignition timing optimized for the heavy fuel and the ignition timing optimized for the light fuel may be stored in advance in the memory 22. Further, the control unit 34 may make the air-fuel ratio in the case where it determines that the heavy fuel is supplied to the engine 10 and the air-fuel ratio in the case where it determines that the light fuel is supplied to the engine 10 different from each other.

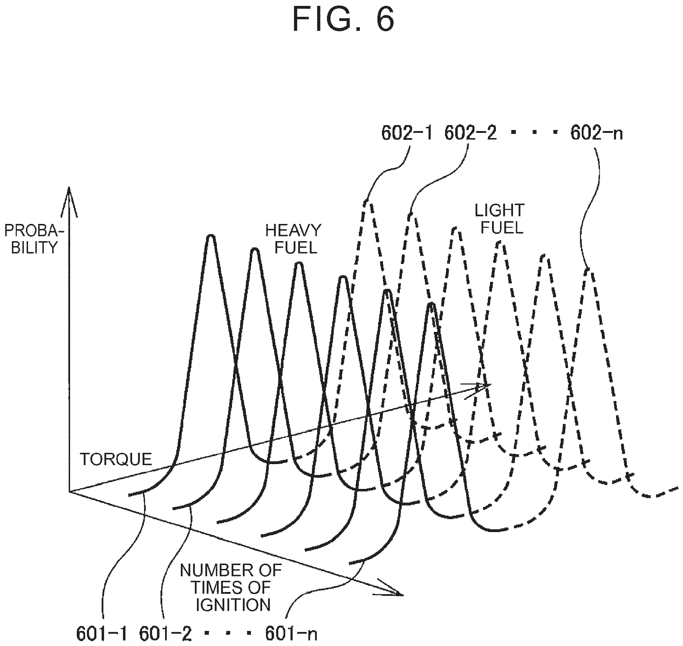

FIG. 6 shows one example of distribution of torque modeled in discrimination boundary setting operation according to the second embodiment. The axes of the graph shown in FIG. 6 indicate the number of times of ignition, torque, and frequency, respectively. Each of the Gaussian distributions 601-1 to 601-n represents a distribution of measurement values of torque in a condition where heavy fuel is supplied to the engine 10, when the n-th ignition takes place. On the other hand, each of the Gaussian distributions 602-1 to 602-n represents a distribution of measurement values of torque in a condition where light fuel is supplied to the engine 10, when the n-th ignition takes place. Thus, distributions of torque are modeled in the form of Gaussian distributions, with respect to each property (heavy or light) of fuel supplied to the engine 10. Thus, in this embodiment, too, the boundary setting unit 33 sets a discrimination boundary in the same manner as in the first embodiment, based on the Gaussian distribution 601-k and Gaussian distribution 602-k, with respect to each number of times of ignition k (k=1, 2, ..., n), so that the discrimination boundary can be optimized.

In a modified example of each of the above embodiments, the modeling unit 32 may use probability distribution, such as Poisson distribution, other than the Gaussian distribution, as probability distribution used for modeling a set of measurement values of a physical parameter, with respect to each condition of the power unit. In this case, too, the boundary setting unit 33 may set a discrimination boundary, in the same manner as in each of the above embodiments.

The ECU 1 may set a discrimination boundary, by performing operation of the modeling unit 32 and boundary setting unit 33, on a set of measurement values of angular acceleration, in place of torque. Then, the control unit 34 may determine whether heavy fuel is supplied to the engine 10, or light fuel is supplied to the engine 10, by comparing the angular acceleration with the discrimination boundary.

In each of the above embodiments and modified examples, a wireless communication terminal (not shown) connected to the ECU 1 via an in-vehicle network may be installed on the vehicle. In this case, a server (not shown) that can communicate with the wireless communication terminal via a wireless base station (not shown) and a core network may set a discrimination boundary, based on a set of measurement values of a physical parameter, which are received from the vehicle. Namely, the server is another example of the discrimination boundary setting apparatus.

In the modified example, the ECU 1 sends an uplink signal including measurement values of one or more physical parameters representing conditions of the power unit, and identification information of the vehicle on which the ECU 1 is installed or the wireless communication terminal, to the wireless base station connected to the core network via a gateway, in predetermined cycles, via the wireless communication terminal. The wireless base station sends the measurement values of the physical parameter(s) and the identification information, which are included in the uplink signal received from the wireless communication terminal, to the server, via the core network.

The server has one or more processors, memory, and communication interface used for connection with the core network. The memory of the server has at least one of a semiconductor memory, magnetic recording medium, and optical recording medium, for example, and stores a set of measurement values of the physical parameter received by the server via the communication interface, in association with the received identification information. The processor of the server performs operation of the modeling unit 32 and boundary setting unit 33, based on the set of measurement values of the physical parameter stored in the memory, so as to set a discrimination boundary. Then, the processor of the server sends the discrimination boundary thus set, to the wireless communication terminal of the vehicle specified by the received identification information, via the communication interface, core network, and wireless base station. The processor of the server may also send parameters (mean value, dispersion, weight coefficient) for specifying probability distribution representing the set of measurement values of the physical parameter for each condition, which is used for setting the discrimination boundary, along with the discrimination boundary thus set, to the wireless communication terminal of the vehicle specified by the received identification information, via the communication interface, core network, and wireless base station. Then, the wireless communication terminal installed on the vehicle passes the discrimination boundary, etc. received from the server, to the ECU 1. The ECU 1 stores the received discrimination boundary in the memory 22, and the discrimination boundary thus received may be utilized when the control unit 34 performs vehicle control.

According to the modified example, the ECU does not need to perform discrimination boundary setting operation; therefore, the computation load of the ECU may be reduced.

Also, the processor of the server may set a discrimination boundary, by performing operation of the modeling unit 32 and boundary setting unit 33, based on a set of measurement values of a physical parameter received from a plurality of vehicles. Then, the processor of the server may send the set discrimination boundary, to each vehicle. This makes it easy to collect measurement values of the physical parameter under various situations; therefore, the processor of the server can set a more versatile discrimination boundary.

As described above, those skilled in the art can make various changes to the embodiments, in accordance with the arrangements of the respective embodiments, within the scope of the invention.

**Claims**

1. A control apparatus configured to control a power unit of a vehicle, comprising:
   an electronic control unit (1) configured to:

   i) store a set of measurement values of at least one physical parameter representing a plurality of conditions of the power unit which are different from each other;
   ii) approximate the stored set of the measurement values, by mixed probability distribution, so as to obtain a first probability distribution as a distribution of the measurement values of the at least one physical parameter representing a first condition as one of the plurality of conditions, and a second probability distribution as a distribution of the measurement values of the at least one physical parameter representing a second condition as another one of the plurality of conditions;
   iii) set a discrimination boundary between values of the at least one physical parameter representing the first condition and values of the at least one physical parameter representing the second condition, between a mean value of the first probability distribution and a mean value of the second probability distribution; and
   iv) control the power unit, according to a result of comparison between a measurement value of the at least one physical parameter and the discrimination boundary.

2. The control apparatus according to claim 1, wherein the electronic control unit (1) sets the discrimination boundary, such that a sum of a probability that a condition of the power unit corresponding to the measurement value of the at least one physical parameter is erroneously determined as the second condition though the condition is the first condition, and a probability that the condition of the power unit corresponding to the measurement value of the at least one physical parameter is erroneously determined as the first condition though the condition is the second condition, is minimized.

3. The control apparatus according to claim 1 or 2, wherein:

   the power unit is an engine, and the first condition is a condition in which knocking occurs in the engine, while the second condition is a condition in which no knocking occurs in the engine;
   the electronic control unit (1) is configured to store the measurement value obtained from a sensor that measures the at least one physical parameter, so as to update the set of the measurement values; and
   when the number of times the electronic control unit (1) determines that knocking occurs in the engine, by comparing the discrimination boundary with the measurement value of the at least one physical parameter obtained from the sensor, reaches a predetermined number, within a latest predetermined period, the electronic control unit (1) obtains again the first probability distribution and the second probability distribution, based on the updated set of the measurement values of the at least one physical parameter, and the electronic control unit (1) sets the discrimination boundary again, between the mean value of the first probability distribution obtained again and the mean value of the second probability distribution obtained again.

4. The control apparatus according to claim 1 or 2, wherein:

   the power unit comprises an engine including an ignition plug, and the first condition is a condition in which knocking occurs in the engine, while the second condition is a condition in which no knocking occurs in the engine; and
   when the measurement value obtained from a sensor that measures the at least one physical parameter is on one side of the discrimination boundary, the one side including the mean value of the first probability distribution, the electronic control unit (1) retards ignition timing of the ignition plug by a larger degree, as the measurement value is closer to the mean value of the first probability distribution.

5. The control apparatus according to claim 1 or 2, wherein:

the power unit comprises an engine, and the first condition is a condition in which heavy fuel is supplied to the engine, while the second condition is a condition in which light fuel is supplied to the engine; and
the at least one physical parameter comprises torque or an angular acceleration generated during fast idling at start of the engine.

6. A control method of controlling a power unit of a vehicle, comprising:

approximating a set of measurement values of at least one physical parameter stored in an electronic control unit (1) and representing a plurality of conditions of the power unit which are different from each other, by mixed probability distribution, so as to obtain a first probability distribution as a distribution of the measurement values of the at least one physical parameter representing a first condition as one of the plurality of conditions, and a second probability distribution as a distribution of the measurement values of the at least one physical parameter representing a second condition as another one of the plurality of conditions;
setting a discrimination boundary between values of the at least one physical parameter representing the first condition and values of the at least one physical parameter representing the second condition, between a mean value of the first probability distribution and a mean value of the second probability distribution; and
controlling the power unit, according to a result of comparison between a measurement value of the at least one physical parameter and the discrimination boundary.

7. A discrimination boundary setting apparatus configured to set a discrimination boundary that is compared with at least one physical parameter representing a plurality of conditions of a power unit of a vehicle which are different from each other, in control of the power unit, comprising
an electronic control unit (1) configured to:

i) store a set of measurement values of the at least one physical parameter;
ii) approximate the set of the measurement values by mixed probability distribution, so as to obtain a first probability distribution as a distribution of the measurement values of the at least one physical parameter representing a first condition as one of the plurality of conditions, and a second probability distribution as a distribution of the measurement values of the at least one physical parameter representing a second condition as another one of the plurality of conditions; and
iii) set the discrimination boundary between values of the at least one physical parameter representing the first condition and values of the at least one physical parameter representing the second condition, between a mean value of the first probability distribution and a mean value of the second probability distribution.

8. A discrimination boundary setting method of setting a discrimination boundary that is compared with at least one physical parameter representing a plurality of conditions of a power unit of a vehicle which are different from each other, in control of the power unit, comprising:

approximating a set of measurement values of the at least one physical parameter stored in an electronic control unit (1), by mixed probability distribution, so as to obtain a first probability distribution as a distribution of the measurement values of the at least one physical parameter representing a first condition as one of the plurality of conditions, and a second probability distribution as a distribution of the measurement values of the at least one physical parameter representing a second condition as another one of the plurality of conditions; and
setting the discrimination boundary between values of the at least one physical parameter representing the first condition and values of the at least one physical parameter representing the second condition, between a mean value of the first probability distribution and a mean value of the second probability distribution.

# FIG. 1

# FIG. 2

EP 3 628 854 A1

PROCESSOR

KNOCK INTENSITY
MEASUREMENT VALUE
ROTATIONAL SPEED
MEASUREMENT VALUE
IN-CYLINDER PRESSURE
MEASUREMENT VALUE

STORING UNIT

31

SET OF KNOCK INTENSITY
MEASUREMENT VALUES

MODELING UNIT

32

BOUNDARY
SETTING UNIT

33

DISCRIMINATION
BOUNDARY

KNOCK INTENSITY
MEASUREMENT VALUE
ROTATIONAL SPEED
MEASUREMENT VALUE
IN-CYLINDER PRESSURE
MEASUREMENT VALUE
DISCRIMINATION
BOUNDARY

CONTROL UNIT

34

CONTROL
OUTPUT

23

FIG. 3A

FIG. 3B

FIG. 3C

# FIG. 4

START

STORE MEASUREMENT VALUE OF KNOCK INTENSITY IN MEMORY ALONG WITH ROTATIONAL SPEED AND CHARGING EFFICIENCY — S101

NUMBER OF MEASUREMENT VALUES FOR CERTAIN COMBINATION OF ROTATIONAL SPEED AND CHARGING EFFICIENCY ≥ PREDETERMINED NUMBER? — S102

NO

YES

APPLY EM ALGORITHM TO SET OF MEASUREMENT VALUES, AND CALCULATE MIXED GAUSSIAN DISTRIBUTION INCLUDING GAUSSIAN DISTRIBUTIONS REPRESENTING DISTRIBUTIONS OF KNOCK INTENSITY WHEN KNOCKING OCCURS AND WHEN NO KNOCKING OCCURS — S103

SET DISCRIMINATION BOUNDARY BETWEEN KNOCK INTENSITY WHERE KNOCKING OCCURS AND KNOCK INTENSITY WHERE NO KNOCKING OCCURS, BETWEEN MEAN VALUES OF RESPECTIVE GAUSSIAN DISTRIBUTIONS — S104

RETURN

# FIG. 5

START

READ DISCRIMINATION
BOUNDARY AND
MBT FROM MEMORY — S201

KNOCK
INTENSITY ≥
DISCRIMINATION
BOUNDARY? — S202

NO

YES

SET IGNITION TIMING TO TIMING
RETARDED BY PREDETERMINED
TIME FROM MBT — S204

SET IGNITION
TIMING TO MBT — S203

OUTPUT CONTROL
SIGNAL FOR
IGNITING IGNITION PLUG
IN SET IGNITION TIMING — S205

END

# FIG. 6

Europäisches
Patentamt

European
Patent Office

Office européen
des brevets

# EUROPEAN SEARCH REPORT

**Application Number**

EP 19 19 5204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 049205 A1 (BAYERISCHE MOTOREN WERKE AG [DE]) 1 April 2010 (2010-04-01) | 1,2,6-8 | INV.<br>F02D35/02 |
| Y | * abstract; claims 1,5; figures 2,3 * | 5 | F02D41/00 |
| A | * paragraph [0007] - paragraph [0008] * | 3 | F02D41/14 |
| | * paragraph [0012] * | | F02D41/24 |
| | * paragraph [0018] - paragraph [0021] * | | F02P5/152 |
| | ----- | | F02D19/06 |
| X,D | IBUKI TATSUYA ET AL: "Knocking detection in gasoline engines based on probability density functions: A mixed Gaussian distribution approach", 2015 54TH IEEE CONFERENCE ON DECISION AND CONTROL (CDC), IEEE, 15 December 2015 (2015-12-15), pages 191-196, XP032862138, DOI: 10.1109/CDC.2015.7402107 [retrieved on 2016-02-08] * abstract; figures 4,5; table 1 * * page 191 - page 192 * | 1,4,6-8 | |
| | ----- | | |
| X | JP 2017 014925 A (ONO SOKKI CO LTD) 19 January 2017 (2017-01-19) * abstract; figure 9 * * paragraph [0050] - paragraph [0056] * | 1,6-8 | **TECHNICAL FIELDS SEARCHED (IPC)**<br>F02D<br>F02P |
| | ----- | | |
| Y | JP 2015 098790 A (TOYOTA MOTOR CORP) 28 May 2015 (2015-05-28) * abstract; figure 4 * * paragraph [0080] - paragraph [0085] * | 5 | |
| | ----- | | |

The present search report has been drawn up for all claims

| Place of search | Date of completion of the search | Examiner |
|---|---|---|
| The Hague | 12 February 2020 | Van der Staay, Frank |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 19 5204

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2020

| Patent document cited in search report | Publication date | Patent family member(s) | Publication date |
|---|---|---|---|
| DE 102008049205 A1 | 01-04-2010 | NONE | |
| JP 2017014925 A | 19-01-2017 | JP 6420213 B2<br>JP 2017014925 A | 07-11-2018<br>19-01-2017 |
| JP 2015098790 A | 28-05-2015 | JP 6028719 B2<br>JP 2015098790 A | 16-11-2016<br>28-05-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GIULIO PANZANI et al.** Engine Knock Margin Estimation Using In-Cylinder Pressure Measurements. *IEEE/ASME Transactions on Mechatronics,* February 2017, vol. 22 (1), 301-311
- **TATSUYA IBUKI et al.** Knocking Detection in Gasoline Engines Based on Probability Density Functions: A Mixed Gaussian Distribution Approach. *IEEE Annual Conference On Decision and Control, 2015,* 2015, 191-196
- **TATSUYA IBUKI et al.** Knocking Detection in Gasoline Engines Based on Probability Density Functions: A Mixed Gaussian Distribution Approach. *IEEE Annual Conference on Decision and Control, 2015,* 2015, 191-196